# EUROPÄISCHE PATENTSCHRIFT

(11) **EP 2 118 685 B1**
(45) Veröffentlichungstag und Bekanntmachung des Hinweises auf die Patenterteilung: **11.01.2012**
(21) Anmeldenummer: 08715926.5
(22) Anmeldetag: 21.02.2008
(51) Int. Cl.: G01V 1/00

(54) **MUSTERERKENNUNGSVERFAHREN ZUR FRÜHERKENNUNG VON INFRASCHALLWIRKSAMEN EREIGNISSEN**
MODEL IDENTIFICATION METHOD FOR THE EARLY IDENTIFICATION OF EVENTS GENERATING INFRASOUND
PROCÉDÉ DE RECONNAISSANCE DE MODÈLES POUR LA DÉTECTION PRÉCOCE D'ÉVÉNEMENTS PRODUISANT DES INFRASONS

(30) Priorität: 09.03.2007 DE 102007011964
(43) Veröffentlichungstag der Anmeldung: 18.11.2009
(73) Patentinhaber: Deutsches Zentrum für Luft- und Raumfahrt e.V., 51147 Köln (DE)
(72) Erfinder: BITTNER, Michael, 86929 Untermühlhausen (DE); HÖPPNER, Kathrin, 82319 Starnberg-Perchting (DE); WÜST, Sabine, 82110 Germering (DE)
(74) Vertreter: von Kreisler Selting Werner
(86) Internationale Anmeldenummer: PCT/EP2008/001364
(87) Internationale Veröffentlichungsnummer: WO 2008/110253

(56) Entgegenhaltungen:
- DATABASE COMPENDEX [Online] ENGINEERING INFORMATION, INC., NEW YORK, NY, US; TOROSHELIDZE T I ET AL: "Analysis of fluctuations in nocturnal air glow of the middle and upper atmosphere prior to earthquakes" XP002506811 Database accession no. EIX90090518400 -& DOKLADY. EARTH SCIENCE SECTIONS 1988 SEP-OCT, Bd. 302, Nr. 5, September 1988 (1988-09), Seiten 26-29, XP002506810
- VALERIY M KRASNOV ET AL: "Recent Advances and Difficulties of Infrasonic Wave Investigation in the Ionosphere" SURVEYS IN GEOPHYSICS, KLUWER ACADEMIC PUBLISHERS, DO, Bd. 27, Nr. 2, 1. März 2006 (2006-03-01), Seiten 169-209, XP019396276 ISSN: 1573-0956

## Beschreibung

### Technisches Gebiet

Die Erfindung betrifft ein Mustererkennungsverfahren zur Früherkennung von infraschallwirksamen Ereignissen.

Derartige Ereignisse, wie beispielsweise Tsunamis, Erdbeben, größere Explosionen, vulkanische Aktivitäten, ausgeprägte Sturmsysteme, Meeresbrandung, Gezeiten, Polarlichtaufbrüche, in die Atmosphäre einfliegende Meteoriten, Überschallknall etwa durch Flugzeuge, Windkraftanlagen, produzieren Infraschall. Bei Infraschall handelt es sich um eine Abfolge von Kompressionen und Expansionen von Luftpaketen. Dies hat jeweils eine Erwärmung und Abkühlung der Luft zur Folge, d.h. Infraschall kann über die Messung von Temperaturfluktuationen nachgewiesen werden.

Infraschall kann sich in der Atmosphäre über weite Strecken, horizontal über einige 1000 Kilometer sowie vertikal über bis zu etwa 200 Kilometern, in alle Richtungen ausbreiten. Über den Infraschall können daher die oben angeführten Ereignisse auch noch in großer Entfernung erkannt werden.

Da die Luftdichte mit zunehmender Höhe über viele Größenordnungen gemäß der barometrischen Höhenformel abnimmt , verstärkt sich das Infraschallsignal mit zunehmender Höhe und das Signal-zu-Rausch-Verhältnis nimmt zu. Die Atmosphäre wirkt somit als "natürlicher Signalverstärker". Messungen von Infraschall in den oberen Atmosphärenschichten können daher als besonders effektiv zum eindeutigen und zuverlässigen Nachweis von Infraschall angesehen werden. Die Schwingungsdauern von Infraschall bewegen sich typischerweise im Bereich von wenigen Sekunden bis zu etwa fünf Minuten.

Zuverlässige Messungen der Temperatur mit hoher zeitlicher Auflösung sind insbesondere mit bodengebundenen Messinstrumenten, wie beispielsweise IR-Spektrometern, Photometern, Imagern möglich, mittels welcher der so genannte Airglow beobachtet wird. Der Airglow ist eine leuchtende Schicht im Höhenbereich der oberen Mesosphäre/unteren Thermosphäre in einer Höhe von etwa 80 bis 100km. Solche Messungen sind besonders geeignet zur Detektion von Infraschall und daher prädestiniert etwa als Komponente eines gegenwärtig von den Vereinten Nationen geplanten Multi-Hazard-Frühwarnsystems.

Die Analyse von Fluktuationen geophysikalischer Parameter, wie beispielsweise Druck, Temperatur, wird in der Meteorologie und der Atmosphärenphysik seit vielen Jahren zur Untersuchung dynamischer Strukturen auf verschiedenen raumzeitlichen Skalen, wie beispielsweise Turbulenz, Infraschallwellen, Schwerewellen oder planetare Wellen angewendet. Hierzu werden auch Zeitreihen von Temperaturfluktuationen verwendet, wie sie mit den vorstehend angeführten bodengebundenen Messinstrumenten, die den Airglow beobachten, gewonnen werden. Hierbei kommen Zeitreihen-Analyseverfahren verschiedenster Komplexität, wie beispielsweise Harmonische Analyse (HA), Maximum Entropie Methode (MEM), Wavelet Analyse (WA), zum Einsatz.

Die Theorie der Infraschallausbreitung in der Atmosphäre gilt seit vielen Jahren als gut ausgearbeitet. Es existieren heute verschiedene numerische Verfahren zur Modellierung der Ausbreitung von Infraschall in der Atmosphäre, beispielsweise HARPA, Inframap. Zeitreihen von Temperaturfluktuationen im Airglow der Atmosphäre können mit verschiedenen Methoden der Zeitreihenanalyse hinsichtlich der Präsenz von Infraschall untersucht werden. Die Vielzahl der eingangs angeführten Infraschallquellen hat eine Überlagerung von unterschiedlichen Infraschallsignaturen zur Folge. Dies führt zu äußerst komplexen Strukturen in den Periodogrammen, wodurch deren Interpretation erheblich erschwert wird. Dies ist jedoch für eine zuverlässige Frühwarnung unabdingbar.

Ein Mustererkennungsverfahren zur Früherkennung von infraschallwirksamen Ereignissen, bei dem Periodogramme aus zeitlich hochaufgelösten mittels bodengebundener Messinstrumente standardisiert und kontinuierlich gemessenen Temperaturfluktuationen im Airglow analysiert werden, ist bekannt aus Toroshelidze T. et al: "Analysis of fluctuations in nocturnal air glow of the middle and upper atmosphere prior to earthquakes", DOKLADY EARTH SCIENCE SECTIONS, 302(5), 1988, Seiten 26-29.

### Darstellung der Erfinung

Aufgabe der Erfindung ist es, ein Mustererkennungsverfahren zur Früherkennung von infraschallwirksamen Ereignissen anzugeben, mit welchem gemessene Infraschallsignaturen aus den Temperaturfluktuationen im Airglow der Atmosphäre eindeutig, schnell, vollautomatisch und zuverlässig etwa in Echtzeit der jeweiligen Infraschallquelle zugeordnet werden können. Gemäß der Erfindung ist diese Aufgabe bei einem Mustererkennungsverfahren durch die Merkmale im kennzeichnenden Teil des Anspruchs 1 gelöst. Vorteilhafte Weiterbildungen der Erfindung sind Gegenstand von Unteransprüchen.

Damit ein Mustererkennungsverfahren zur schnellen und zuverlässigen Detektion von Infraschallsignaturen eingesetzt werden kann, die durch die eingangs angeführten Infraschallquellen generiert werden, basiert das erfindungsge.

mäße Mustererkennungsverfahren auf zeitlich hoch aufgelösten Messungen von Temperaturfluktuationen, die mit bodengebundenen Instrumenten, die den sogenannten Airglow messen, kontinuierlich standardisiert und über einem festen Ort, dem Aufstellungsort des Messinstruments, aufgezeichnet werden. Hierfür wird eine Kombination aus statistisch und physikalisch motivierten Ansätzen verwendet.

Periodogramme aus Zeitreihen der gemessenen Temperaturfluktuationen im Frequenzbereich des Infraschalls werden ständig mit entsprechenden Periodogrammen aus modellbasierten Simulationen verglichen. Simuliert wird hierbei ständig eine zu erwartende Temperaturfluktuation, wie sie beispielsweise durch ein typisches Tsunami-Ereignis verursacht wird. Einer solchen Simulation liegt die Ausbreitung von Infraschall in der Atmosphäre zugrunde.

Dabei wird jeweils der aktuelle dynamische Hintergrundzustand der Atmosphäre berücksichtigt, wie beispielsweise großräumige Wind- und Temperaturverteilungen. Hierzu wird ein numerisches Atmosphärenmodell, wie beispielsweise GME, ECMWF-Modell, NOAA-GFS, für die jeweils betrachtete geographische Region eingesetzt. Liegt eine signifikante Ähnlichkeit der Periodogramme aus den Zeitreihen der gemessenen und der simulierten Temperaturfluktuationen vor, so ist dies eine deutliche Indikation für ein Ereignis. Der Ort der Infraschallquelle wird über ein Infraschall-Ausbreitungsmodell, das sogenannte "Ray Tracing", bestimmt.

Die Wellenlängen von Infraschall mit Schwingungsdauern zwischen etwa 5 Minuten und 0,1 Sekunden liegen somit zwischen etwa 1000 km und 30 m. Solche Infraschallwellen werden in der Atmosphäre nur sehr schwach absorbiert und können sich daher über große Entfernungen ausbreiten. Ferner wächst die Amplitude einer am Erdboden verursachten Infraschallwelle mit zunehmender Höhe aufgrund des exponentiell abnehmenden Luftdrucks an. Die mit dieser Infraschallwelle verbundenen Temperaturfluktuationen bewirken eine Modulation des sogenannten "Airglows", welcher, wie bereits ausgeführt, vom Boden aus mit verschiedenen Instrumenten mit hoher zeitlicher Auflösung gemessen werden kann.

Es gibt eine Vielzahl von Infraschall verursachenden Ereignissen, die eine individuelle Signatur im Infraschall erzeugen und damit ihren eigenen "spektralen Fingerabdruck" haben. Dies wiederum bedeutet, dass die gemessenen Zeitreihen von Temperaturfluktuationen im Airglow der Atmosphäre eine Vielzahl von einander überlagerten Infraschallsignaturen aufweise.

Entscheidend bei dem erfindungsgemäßen Mustererkennungsverfahren ist die Diskriminierung der verschiedenen Infraschall-Signalquellen etwa in Echtzeit. Das bedeutet, dass während der Aufzeichnung von Messungen praktisch zeitgleich der Prozess der Mustererkennung läuft, mit der Möglichkeit, dass sehr schnell bei akutem Verdacht reagiert werden kann. Ein solches Mustererkennungsverfahren ist die Voraussetzung für den Einsatz solcher Messsysteme in einem Multi-Hazard-Frühwarnsystem.

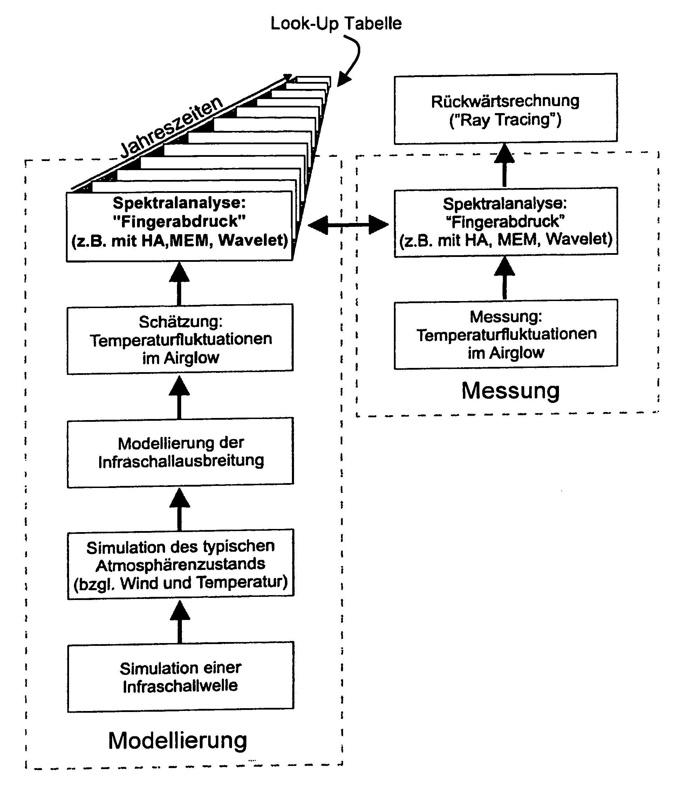

### Beschreibung der Zeichnung

Nachfolgend wird die Erfindung anhand eines Ablaufdiagramms eines Mustererkennungsverfahrens schematisch veranschaulicht.

### Beschreibung der Erfindung

Bei dem Mustererkennungsverfahren werden verwendet:
a) statistische Kenngrößen, wie beispielsweise der Standardabweichungen, die eine übergeordnete Kennzeichnung der aktuellen Stärke der Fluktuationen erlauben,
b) Spektralanalyseverfahren, wie beispielsweise die Harmonische Analyse (HA), die Maximum Entropie Methode (MEM) oder die Wavelet Analyse (WA), die eine Charakterisierung des jeweiligen spektralen Musters der Zeitreihe zum Zeitpunkt der aktuellen Messung ermöglichen und
c) eine Modellierung der Ausbreitung des Infraschalls in der Atmosphäre für jeweils typische Infraschall-Quellensignale, beispielsweise Beben, Explosion, Vulkan, um die potentiell erwarteten Temperaturfluktuationen im Airglow hinsichtlich ihrer Frequenz und ihrer Amplitude zu kennzeichnen ("spektraler Fingerabdruck").

Die Infraschallausbreitung wird dabei jeweils für ein sensitives, d.h. potentiell gefährdetes Gebiet simuliert. Der charakteristische "Fingerabdruck" wird in einer "Look-Up-Tabelle" abgelegt. Hierzu wird der mittlere Atmosphärenzustand hinsichtlich Wind- und Temperaturverteilung mit einem Atmosphärenmodell geschätzt, da die Ausbreitung des Infraschalls von den jeweiligen Temperatur- und Windverhältnissen abhängt. Hierbei ist die mittlere Temperatur-und Windverteilung eine Funktion der Jahreszeit, was in der Look-Up-Tabelle berücksichtigt wird.

In besonders kritischen Gebieten wird darüber hinaus fortwährend ein Ereignis, beispielsweise ein Beben, simuliert und die Ausbreitung des Infraschalls in einer möglichst realistisch geschätzten Atmosphäre bezüglich Temperatur-und Windverteilung berechnet. In diesem Fall handelt es sich um eine Echtzeitsimulation.

Die tatsächlichen, im Airglow gemessenen Temperaturfluktuationen werden permanent und kontinuierlich spektral analysiert. Der so ermittelte spektrale Fingerabdruck der echten Temperaturfluktuationen wird ständig zusammen mit dem spektralen Fingerabdruck der simulierten Daten aus der Look-Up-Tabelle bzw. gegebenenfalls mit der Echtzeitsimulation verglichen. Für die Spektralanalyse wird dabei jeweils eine Kombination verschiedener Verfahren verwendet, wie beispielsweise Wavelet-Analyse, Maximum Entropie Methode, Harmonische Analyse.

Ergibt der Mustervergleich eine signifikante Ähnlichkeit der Strukturen, so besteht ein akuter Verdacht auf ein vorliegendes infraschallwirksames Ereignis. In diesem Fall erfolgt eine Rückwärtsrechung der Infraschallausbreitung von der oberen Mesosphäre zum Erdboden mit Hilfe eines Infraschallausbreitungsmodells ("Ray Tracing"). Auf diese Weise wird die Abschätzung der geographischen Lage der Infraschallquelle für das registrierte Infraschallsignal erhalten.

Gegenwärtig werden im Auftrag der Vereinten Nationen von verschiedenen Institutionen Konzepte für den Aufbau globaler sogenannter "Multi-Hazard-Frühwarnsysteme" erarbeitet. Diese Systeme sollen möglichst zuverlässig arbeiten, d.h. Fehlalarme sollen wegen der potentiellen erheblichen volkswirtschaftlichen Auswirkungen möglichst vermieden werden. Aus diesem Grunde wird die Warnung vor einem Ereignis immer auf der Analyse verschiedener und voneinander unabhängiger Sensornetzwerke beruhen. Die Nutzung von Infraschallbeobachtungen im Airglow kann daher eine wichtige Komponente in einem solchen zukünftigen Frühwarnsystem darstellen.

## Patentansprüche

1. Mustererkennungsverfahren zur Früherkennung von infraschallwirksamen Ereignissen, bei dem Periodogramme aus zeitlich hochaufgelösten mittels bodengebundener Messinstrumente standardisiert und kontinuierlich gemessenen Temperaturfluktuationen im Airglow analysiert werden, **dadurch gekennzeichnet, dass**
ein aus den Periodogrammen ermittelter, sogenannter spektraler Fingerabdruck mit einem in einer Look-Up-Tabelle abgelegten, sogenannten spektralen Fingerabdruck von Periodogrammen aus modellbasierten Infraschallausbreitungssimulationen verglichen wird und
bei einer signifikanten Ähnlichkeit zwischen Strukturen der Periodogramme aus den Zeitreihen der gemessenen und der simulierten Temperaturfluktuationen eine Rückwärtsberechnung der Infraschallausbreitung in der oberen Mesosphäre zum Erdboden mit Hilfe eines Infraschall-Ausbreitungsmodells, des sogenannten Ray-Tracing durchgeführt wird und dadurch der Ort einer Infraschallquelle ermittelt ist.

2. Verfahren nach Anspruch 1, **dadurch gekennzeichnet, dass** für ein kritisches, potentiell gefährdetes Gebiet fortwährend eine Infraschallausbreitung simuliert wird und dieser mittels Spektralanalyseverfahren ermittelte charakteristische, sogenannte spektrale Fingerabdruck in der Look-Up-Tabelle abgelegt wird.

3. Verfahren nach Anspruch 1 oder 2, **dadurch gekennzeichnet, dass** der mittlere Atmosphärenzustand hinsichtlich von der jeweiligen Jahreszeit abhängiger Wind- und Temperaturverteilungen mit Hilfe eines Atmosphärenmodells geschätzt und in die Infraschallausbreitungsmodellierung mit eingeht.

4. Verfahren nach Anspruch 1 oder 2, **dadurch gekennzeichnet, dass** statistische Kenngrößen, sogenannte statistische Momente verwendet werden.

5. Verfahren nach Anspruch 1 oder 2, **dadurch gekennzeichnet, dass** Spektralanalyseverfahren zur Charakterisierung eines spektralen Musters einer Zeitreihe zum Zeitpunkt einer Messung durchgeführt werden.

6. Verfahren nach Anspruch 5, **dadurch gekennzeichnet, dass** als Spektralanalyseverfahren eine Harmonische Analyse (HA), die Maximumentropie-Methode (MEM) oder die Wavelet-Analyse (WA) oder Kombinationen dieser Spektralanalyseverfahren durchgeführt werden.

## Claims

1. A pattern recognition method for the early identification of events generating infrasound, wherein periodograms of temporally highly resolved temperature fluctuations in the airglow are analyzed, which fluctuations are measured in a standardized and continuous manner by means of earth-bound measuring instruments,
**characterized in that**
a so-called spectral fingerprint determined from the periodograms is compared with a so-called spectral fingerprint stored in a look-up table and obtained from periodograms of model-based infrasound propagation simulations, and
upon a significant similarity between structures of the periodograms from the time series of the measured and the simulated temperature fluctuations, a backward calculation of the infrasound propagation in the upper mesosphere back to the ground is performed using an infrasound propagation model, the so-called Ray Tracing, whereby the position of an infrasound source is determined.

2. The method of claim 1, **characterized in that** an infrasound propagation is continually simulated for a critical potentially endangered area and this unique so-called spectral fingerprint obtained by spectral analysis methods is stored in the look-up table.

3. The method of claim 1 or 2, **characterized in that** the mean atmosphere condition with respect to the distributions of wind and temperature as a function of the respective season is estimated with the use of an atmosphere model and integrated into the infrasound propagation modeling.

4. The method of claim 1 or 2, **characterized in that** statistic parameters, the so-called statistic moments, are used.

5. The method of claim 1 or 2, **characterized in that** spectral analysis methods are executed for the characterization of a spectral model of a time series at the moment of measurement.

6. The method of claim 5, **characterized in that** the spectral analysis method executed is a Harmonic Analysis (HA), a Maximum Entropy Method (MEM) or a Wavelet Analysis (WA) or combinations of these spectral analysis methods.

## Revendications

1. Procédé de reconnaissance de modèles pour la détection précoce d'évènements produisant infrasons, dans lequel sont analysées des périodogrammes de fluctuations de température à haute résolution temporelle dans la luminescence atmosphérique, lesdites fluctuations étant mesurées d'une manière standardisée et continue à l'aide d'instruments de mesurage terrestres,
**caractérisé en ce qu'**une signature spectrale obtenue desdites périodogrammes est comparée avec une signature spectrale de périodogrammes obtenues de simulations de la propagation d'infrasons basées sur des modèles et enregistrées dans une table de référence, et
en cas d'une similarité importante entre des structures des périodogrammes, l'on utilise les séries chronologiques des fluctuations de température mesurées et simulées pour faire un calcul rétroactif de la propagation d'infrasons dans la mésosphère supérieure vers la terre, utilisant un modèle de la propagation d'infrasons, appelé "Ray-Tracing", et pour ainsi déterminer la position d'une source d'infrasons.

2. Procédé selon la revendication 1, **caractérisé en ce que**, pour une région critique, potentiellement en danger, l'on fait une simulation de la propagation d'infrasons continue et cette signature spectrale caractéristique, déterminée par des méthodes d'analyse spectrale, est enregistrée dans ladite table de référence.

3. Procédé selon les revendications 1 ou 2, **caractérisé en ce que** l'état moyen de l'atmosphère est estimé quant aux distributions de vent et de température dépendant de la saison, utilisant un modèle de l'atmosphère, et est inclus dans l'élaboration du modèle de la propagation d'infrasons.

4. Procédé selon les revendications 1 ou 2, **caractérisé en ce que** des caractéristiques statistique, appelées moments statistiques, sont utilisées.

5. Procédé selon les revendications 1 ou 2, **caractérisé en ce que** des méthodes d'analyse spectrale sont exécutées pour caractériser un modèle spectral d'une série chronologique au moment d'un mesurage.

6. Procédé selon la revendication 5, **caractérisé en ce que** la méthode d'analyse spectral exécuté est une analyse harmonique (HA), la méthode d'entropie maximale (MEM) ou l'analyse des ondelettes (WA) ou des combinaisons de ces méthodes d'analyse spectrale.
